**Europäisches Patentamt**

**European Patent Office**

**Office européen des brevets**

(19)

(11) Veröffentlichungsnummer : **0 054 825**
**B1**

(12) **EUROPÄISCHE PATENTSCHRIFT**

(45) Veröffentlichungstag der Patentschrift :
09.07.86

(21) Anmeldenummer : 81110223.5

(22) Anmeldetag : 08.12.81

(51) Int. Cl.⁴ : **B 62 D 27/06, E 05 C 1/14,
E 05 C 9/04, E 05 C 19/00**

(54) **Verriegelungsvorrichtung.**

(30) Priorität : 13.12.80 DEU 8033182

(43) Veröffentlichungstag der Anmeldung :
30.06.82 Patentblatt 82/26

(45) Bekanntmachung des Hinweises auf die Patenterteilung : 09.07.86 Patentblatt 86/28

(84) Benannte Vertragsstaaten :
BE FR NL

(56) Entgegenhaltungen :
BE-A-   567 768
CH-A-   115 664
DE-A- 2 444 021
DE-U- 6 811 961
DE-U- 7 915 856
DE-U- 8 033 182
FR-A- 1 261 587
US-A- 1 431 758

(73) Patentinhaber : Westfalia-Werke Franz Knöbel &
Söhne KG
Am Sandberg 45
D-4840 Rheda-Wiedenbrück (DE)

(72) Erfinder : Braun, Dieter
Robert-Schumann-Strasse 6
D-4840 Rheda-Wiedenrück (DE)
Erfinder : Koglin, Klaus
Flurstrasse 16
D-4410 Warendorf (DE)

(74) Vertreter : Meldau, Gustav, Dipl.-Ing. et al
Vennstrasse 9
D-4830 Gütersloh 1 (DE)

Jouve, 18, rue St-Denis, 75001 Paris, France

EP 0 054 825 B1

**Beschreibung**

Die Erfindung betrifft eine Verriegelungsvorrichtung für Klappwände, -läden, -türen o. dergl., insbesondere für klappbare Bordwände von Fahrzeugen oder Fahrzeuganhängern, die im Winkel zueinander stehen, mit einem Gehäuse verschieblichen, federbelasteten Riegelbolzen, der zur axialen Verschiebung von der Schließstellung in die Frei-Stellung von einem formschlüssig angreifenden Hebel gegen die Federwirkung zu betätigen ist, zur Anbringung an einem Wandelement und eine damit zusammenwirkende Öse an einem anderen Wandelement.

Bekannte Verriegelungsvorrichtungen für Klappwände, Klappläden, Klapptüren, insbesondere solche, die beim Bau von Kraftfahrzeugen bzw. Kraftfahrzeuganhängern benutzt werden, sind beispielsweise der schwenkbare Winkelhebel, dessen abgewinkelter Schenkel in eine Öse faßt und dort mit einem Splint gesichert werden kann. Andere Vorrichtungen gehen von einem Übertotpunktverschluß aus, bei dem eine Verriegelungsöse oder eine Verriegelungskralle hinter eine zweite Kralle faßt. Diese Verriegelungsvorrichtungen haben jedoch den Nachteil, daß sie einzeln geschlossen werden müssen, wobei die oftmals die Klappwand mit der einen Hand gehalten werden muß, während mit der anderen die Verschlußvorrichtung in Eingriff gebracht und gesperrt wird. Dieses Vorgehen erlaubt ein sicheres Verriegeln klappbarer Bordwände im angelegten Zustand ; nachteilig ist jedoch, daß das Verriegeln ebenso wie das Entriegeln jeweils beide Hände in Anspruch nimmt. Selbst wenn zwei Verriegelungseinrichtungen zum Verschließen oder Lösen der Klappwand in Reichweite sind, müssen beide nacheinander gelöst oder verriegelt werden.

Grundsätzlich bestehen zwei Möglichkeiten zwei im Winkle zueinander stehende Wandelemente miteinander zu verriegeln, wobei allgemein bzw. in der Mehrzahl der Fälle davon auszugehen ist, daß es sich bei dem einem Wandelement um eine abklappbare Fahrzeug-Rückwand handelt :

1. Der Verriegelungsbolzen steht senkrecht :
Dann ist es gleichgültig, ob er an der Rückwand oder an der Seitenwand angeordnet ist.

2. Der Verriegelungsbolzen liegt waagerecht :
Dann muß er an der beweglichen Wand, also an der Rückwand angeordnet sein.

Sowohl aus der DE-A-2 444 021 als auch der DE-U-6 811 961 sind Verriegelungen von in einer Flucht bzw. in einer Ebene zueinander stehenden Wandelementen bekannt. Bei der dabei verwendeten senkrechten Anordnung der Verriegelungsbolzen sind die Hülsen, mit denen die Bolzen zusammenwirken, über der Wand anzuordnen, so daß einerseits ein weiterer Aufbau der Wand behindert bzw. unmöglich gemacht ist, bei überdeckter Plane nicht erreichbar ist und bei hohen Fahrzeugwänden von einer neben dem Fahrzeug stehenden Person erreichbar sind. Wenngleich derartige bekannte Verriegelungsvorrichtungen auch für die Verriegelung von zwei im Winkel zueinander stehender Wandelemente verwendbar sind, sind sie jedoch mit den benannten Nachteilen versehen.

Hier setzt die Erfindung ein, ihr liegt die Aufgabe zugrunde eine Verriegelungseinrichtung anzugeben, die beim Schließen der Klappwände selbsttätig einrastet, einhändig zu lösen ist, wirtschaftlich herstellbar ist und die darüber hinaus betriebssicher eingesetzt werden kann. Ihr liegt weiter die Aufgabe zugrunde, bei paarweiser und gegenständiger Anordnung der erfindungsgemäßen Verriegelungsvorrichtung eine Zentralbetätigung dafür vorzuschlagen. Diese Aufgabe wird nach der Erfindung durch eine Verriegelungsvorrichtung der gattungsgemäßen Art gelöst, die gekennzeichnet ist durch ein Gehäuse mit abgewinkelter Ösenarmaufnahme und in der rückwärtigen Gehäusewand angeordnete hinterer Führung für den Riegelbolzen sowie eine das Gehäuse in zwei Räume (die Ösenarmaufnahme und die Bolzenaufnahme) unterteilende Platte, in der die vordere Führung des Riegelbolzens angeordnet ist, wobei der Riegelbolzen im Abstand von der vorderen Führung mit einem Bolzenmitnehmer versehen ist und seine Feder zwischen diesem Bolzenmitnehmer und der rückwärtigen Gehäusewand angeordnet ist und weiterhin eine die freie Gehäuseseite abdeckende Schale, die über eine Schwenkachse mit der Oberseite des Gehäuses verbunden ist und mit ihren abgewinkelten, die freien Seiten des Gehäuses übergreifenden Seiten über den Bolzenmitnehmer mit dem Riegelbolzen verbunden ist und in ihrem rückwärtigen Bereich als Griffschale ausgebildet ist, wobei die Verschlußöse an ihrem Ösenarm mit einer Abkröpfung versehen ist.

Der Riegelbolzen ist mit einem in Grenzlage an der rückwärtigen Gehäuseseite anliegenden Bund versehen. Der Bolzenmitnehmer des Riegelbolzens ist als sich in Grenzlage gegen die Platte aufstützender Hubbegrenzer ausgebildet. Die Einführöffnung der Ösenarmaufnahme für den Ösenarm ist vorteilhaft mit einem Kragen versehen, wobei der Kragen zweckmäßig eine die Kante der Einführöffnung der Ösenarmaufnahme übergreifende Wulst aufweist. Vorteilhaft ist der Kragen mit der Wulst als einstückiges Formstück ausgebildet und besteht zweckmäßig aus Kunststoff.

Bei paarweise gegenständiger Anordnung der Verriegelungsvorrichtungen auf einer Klappwand ist eine deren Riegelbolzen verbindende Zugeinrichtung vorgesehen. Diese Zugeinrichtung kann als zweiteiliger Zug ausgebildet sein. Vorteilhaft ist ein Drehgriff vorgesehen, mit dem die Züge des zweiteiligen Zuges in Eingriff sind.

Ein besonderer Vorteil des Gegenstandes der Erfindung besteht darin, daß eine derartige Verriegelungsvorrichtung äußerst gedrängt und kompakt aufgebaut ist, nur geringen Raum in Anspruch nimmt und zwar insbesondere nach der Länge und nach der Höhe und daß diese Verriegelungsvorrichtung aufgrund ihrer besonderen Bauart bei geringem Bauaufwand und damit preisgünstige Herstellung eine hervorragende Abkapselung der mechanischen Teile gewährleistet. Damit ist ein Schutz dieser mechanischen Teile gegen jegliche Einflüsse der Umwelt, sei es Schmutz, Regen, Eis oder seien es auch mechanische Beanspruchungen, sichergestellt.

Durch die Ausbildung des Gehäuses in Schalenform, das noch dazu mit einer vorderen, abgewinkelten Ösenaufnahme die damit ebenfalls besonders gut geschützt ist versehen ist und durch Ausbildung des Betätigungsgriffes ebenfalls in Schalenform, der die innere durch das Gehäuse gebildete Schale übergreift und insbesondere an den noch offenen Stellen dieses abdeckt, ist eine geschlossene Bauart für eine derartige Verriegelungsvorrichtung erreicht, wie das bislang noch nicht bekannt oder ermöglicht war.

Das Wesen der Erfindung wird im folgenden anhand eines Ausführungsbeispieles mit Bezug auf die Figuren 1 bis 8 näher erläutert. Im einzelnen zeigen :

Figur 1 eine perspektivische Ansicht der geschlossenen Verriegelungsvorrichtung ;

Figur 2 eine perspektivische Ansicht der geöffneten Verriegelungsvorrichtung ;

Figur 3 Verriegelungsvorrichtung, horizontal geschnitten ;

Figur 4 Verriegelungsvorrichtung, seitliche Ansicht, halbseitig geschnitten ;

Figur 5 Ösenarmaufnahme, Einführungsöffnung für den Ösenarm mit Kragen und Wulst ;

Figur 6 Verriegelungsvorrichtung geschlossen, halb geschnitten ;

Figur 7 Verriegelungsvorrichtung geöffnet, halb geschnitten ;

Figur 8 abklappbare Bordwand mit paarweiser gegenständiger Anordnung der Verriegelungsvorrichtung und zentraler Entriegelung.

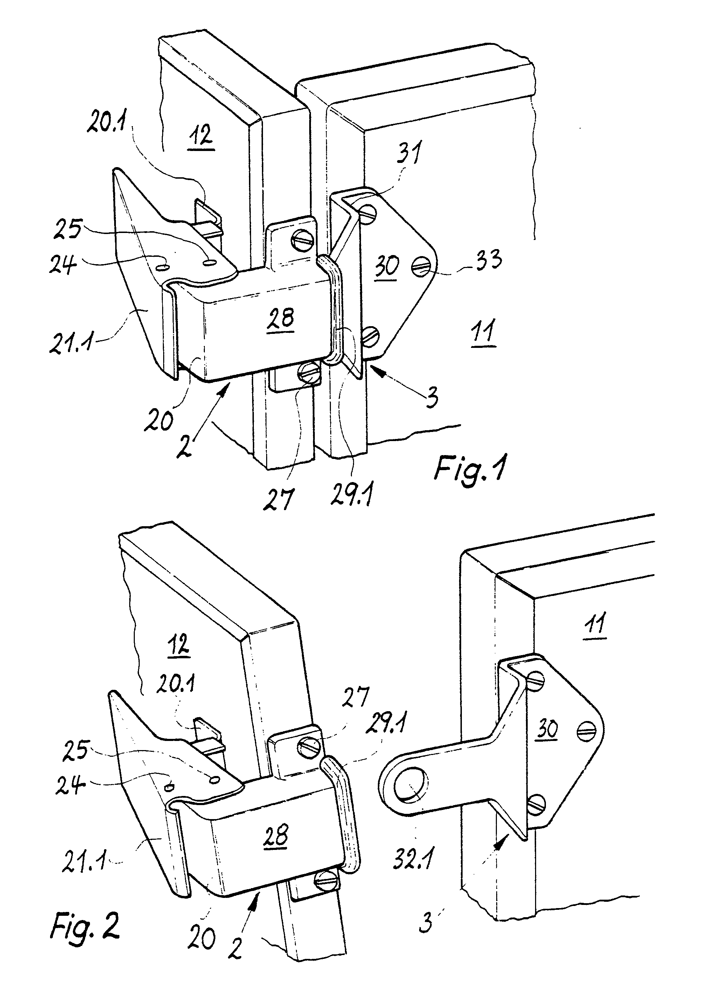

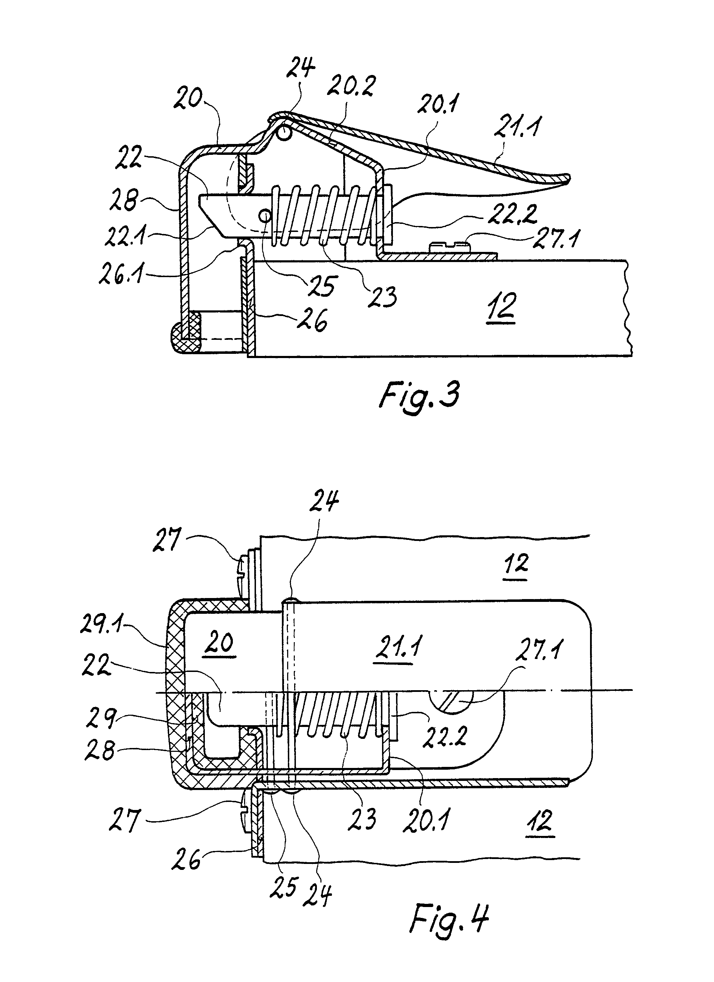

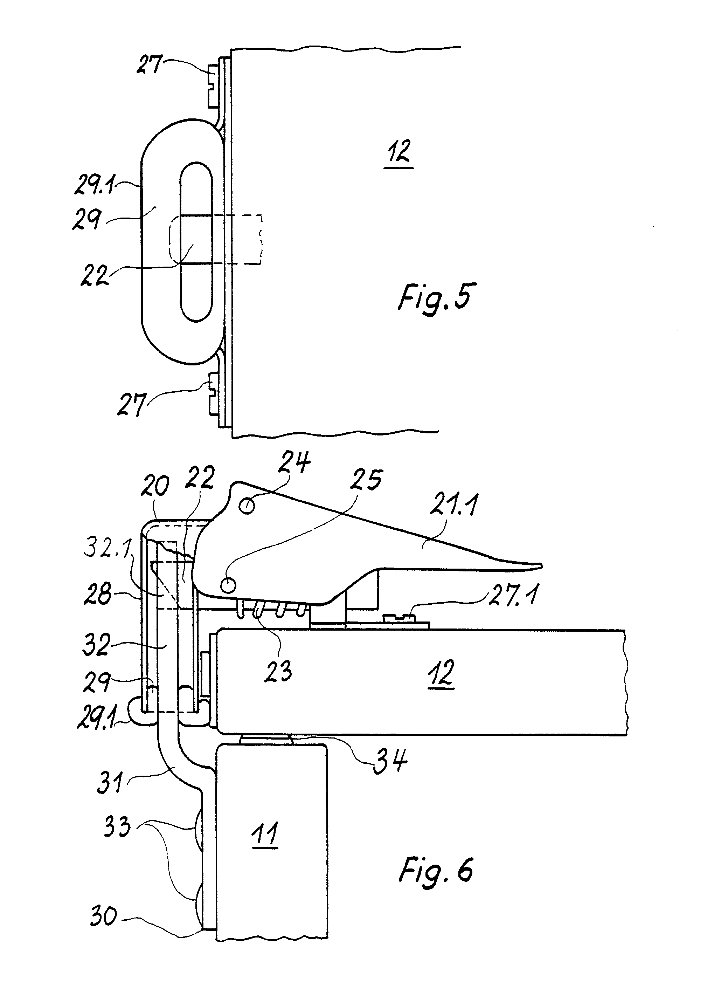

Im einzelnen zeigt Figur 1 die feste Bordwand 11 und die bewegbare Bordwand 12, die mit der neuerungsgemäßen Verriegelungsvorrichtung lösbar miteinander verbunden sind. Dazu sind an der festen Bordwand 11 der Ösenteil und an der bewegbaren Bordwand 12 der Riegelteil der Verriegelungsvorrichtung verschraubt, wobei der Ösenteil 3 mit seiner Befestigungsplatte 30 mit Hilfe der Schrauben 33 an der Bordplatte 11 befestigt ist. Der Riegelteil ist mit den seitlichen Lappen des Gehäuses 20, die auf der Seite der Ösenarmaufnahme 28 angeordnet sind, mit Hilfe der Schrauben 27 stirnseitig mit der bewegbaren Bordplatte 12 verschraubt, die Abkröpfung 31 überbrückt die Höhendifferenz und erlaubt ein ordnungsgemäßes Einführen des Ösenarms 32 (Figur 2) in die Ösenarmaufnahme 28. Die Ösenarmaufnahme 28 des Gehäuses 20 des Riegelteiles 2 der Verriegelungseinrichtung steht etwa rechtwinklig zum Gehäuse 20 und umgreift somit die korrespondierende Kante der bewegbaren Bordwand 12. Der der Ösenarmaufnahme 28 abgewandte Teil des Gehäuses 20 wird von der hier als Griffschale 21.1 ausgebildeten Schale überdeckt. Diese Griffschale ist um die Achse 24 schwenkbar an das Gehäuse 20 angelenkt und mit dem Bolzenmitnehmer 25 mit dem Riegelbolzen verbunden. Ein Schwenken der Griffschale 21.1 um die Schwenkachse 24 hat demzufolge eine Bewegung des Bolzenmitnehmers 25 längs eines Kreisbahnabschnittes um die Drehachse 24 zur Folge. Die Figur 2 zeigt die gleiche Situation, jedoch in geöffnetem Zustand. Die bewegbare Bordwand 12 ist gegenüber der festen Bordwand 11 nur leicht abgewinkelt, um das Zusammenwirken des Riegelteiles 2 und des Ösenteiles 3 der Verriegelungseinrichtung besser zu verdeutlichen. Der Ösenarm 32 mit dem Auge 32.1, in das der — in Figur 2 nicht dargestellte — Riegelbolzen eingreift, befindet sich außerhalb der Ösenarmaufnahme 28. Die zum Entriegeln um die Achse 24 zu schwenkende Griffschale 21.1 ist bereits wieder in ihrer Ruhestellung, der Grenzlage. Von der Griffschale nahezu verdeckt ist das rückwärtige Gehäuseteil mit der rückwärtigen Gehäusewand 20.1 zu erkennen. Die Figuren 3, 4 und 5 zeigen den Verriegelungsteil 2 der Verriegelungsvorrichtung jeweils in anderer Ansicht. In Figur 3 ist ein Schnitt des Riegelteiles dargestellt. Auf der bewegbaren Bordwand 12 ist das Gehäuse 20 mit der im wesentlichen rechtwinklig dazu stehenden Ösenarmaufnahme 28 befestigt. Zur Befestigung dienen die Schraube 27.1 sowie die Schrauben 27 (Figuren 4 und 5). Die das Gehäuse abdeckende Schale ist als Griffschale 21.1 ausgebildet und die Schwenkachse 24 wird durch einen Bolzen gebildet, der beispielsweise beidseitig Vernietungen aufweist. Im Inneren des Gehäuses 20 ist der Riegelbolzen 22 angeordnet, der von der Öffnung in der rückwärtigen Gehäusewand 20.1 und der Abdeckplatte 26 geführt und von der Feder 23 in Grenzlage gehalter wird. Der zur Übertragung der Federkraft auf den Riegelbolzen notwendige Federsplint ist in dem Ausführungsbeispiel zum Bolzenmitnehmer 25 umgebildet. Über diesen Bolzenmitnehmer wird einmal die Kraft der Feder 23 auf den Riegelbolzen 22 übertragen. Zum anderen stellt der Bolzenmitnehmer 25 eine Verbindung zur schwenkbaren Griffschale 21.1 her und bewegt sich, wenn die Griffschale 21.1 um ihre Schwenkachse 24 geschwenkt wird, auf einem dem Schwenkwinkel entsprechenden Kreisbogen um die gleiche Achse. Dabei wird der Riegelbolzen 22 so bewegt, daß die Feder 23 gespannt wird. Wird die Griffschale 21.1 freigegeben, überwiegt die Federkraft, und der Riegelbolzen 22 — einschließlich der mit ihm über den Bolzenmitnehmer 25 verbundenen Griffschale 21.1 — wird von der Feder 23 in Grenzlage gedrückt. Diese Grenzlage ist in dem gewählten Ausführungsbeispiel dadurch gegeben, daß der hintere Bund 22.2 des Riegelbolzens 22 sich gegen die rückwärtige Gehäusewand 20.1 legt. Die Figur 4 zeigt einen Halbschnitt des Riegelteils der Verriegelungsvorrichtung in zu Figur 3 rechtwinkliger Blickrichtung. In dieser Darstellung sind die drei Befestigungsschrauben, nämlich die beiden Schrauben 27 neben der Ösenarmaufnahme und die Schraube 27.1 unter der Griffschale 21.1 zu erkennen. Der Riegelbolzen 22 wird von der Feder 23 in seine Grenzlage gedrückt, wobei der Bund 22.2 an der rückwärtigen Gehäuseseite 20.1 anliegt. In dieser Grenzlage liegt der als Bolzenmitnehmer 25 ausgebildete Federsplint noch deutlich vor der die Ösenarmaufnahme 28 abdeckenden Wand 26. Die Einführöffnung der Ösenarmaufnahme 28 ist mit einem Kragen 29 versehen, der sich nach außen in eine die Kante der Einführöffnung übergreifende Wulst 29.1 fortsetzt. Dies ist in Figur 5 aus zu Figur 4 entgegengesetzter Blickrichtung zu erkennen. Die Einführöffnung für den Ösenarm ist durch den eingelegten Kragen 29 so begrenzt, daß der Ösenarm kein großes Spiel hat. Die nach außen übergreifende Wulst 29.1 schützt die untere Kante der Ösenarmaufnahme. In der Tiefe des von der Einführöffnung freigegebenen Schlitzes ist der Regelbolzen 22 erkennbar.

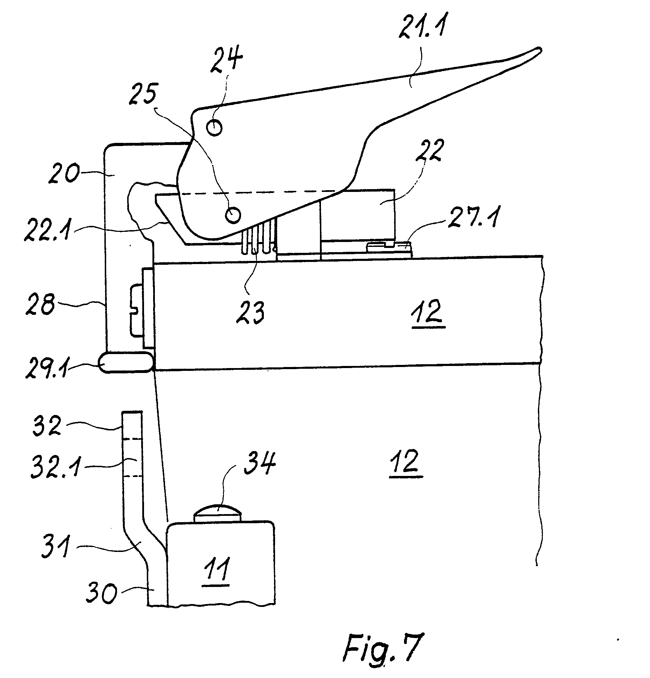

Die Figuren 6 und 7 entsprechen in ihrer Darstellung der Figur 3, wobei hier der an der festen Bordwand 11 befestigte Ösenteil 3 und sein Zusammenwirken mit dem Riegelteil 2 dargestellt ist. Figur 6 zeigt den Zustand, in dem die feste Bordwand 11 und die bewegbare Bordwand 12 miteinander verriegelt sind. Der Riegelbolzen 22 faßt dabei in das Auge 32.1 (Figur 7) des Ösenarms 32, der durch die Einführöffnung der Ösenarmaufnahme eingeführt wurde beim Einführen stößt zunächst die vordere Kante des Ösenarmes 32 auf die Aufgleitschräge 22.1 (Figur 3) des Riegelbolzens 22, und drückt diesen über eine Keilwirkung gegen die Kraft der Feder 23 aus der Grenzlage so weit zurück, daß der Ösenarm 32 an der vorderen Kante des Riegelbolzens 22 vorbeigleiten kann. Wegen der durch die Einführöffnung 26.1 in der Abdeckplatte 26 im Zusammenwirken mit der Führungsöffnung für den Riegelbolzen 22 in der rückwärtigen Gehäusewand 20.1 gegebenen guten Führung kann der Riegelbolzen bei weiterem Einführen des Ösenarmes 32 in das Auge 32.1 einfallen. Da in Gegenrichtung keine Schräge zur Verfügung steht, gibt es auch keine Keilwirkung. Eine entgegengesetzt wirkende, auf ein Öffnen der bewegbaren Bordwand gerichtete Kraft bleibt somit ohne Wirkung : wichtig dabei ist, daß der Riege bolzen selbst gegen Verdrehen gesichert ist, was durch die Bolzenmitnahme 25 gewährleistet ist. Diese Kraft ist im wesentlichen die elastische Rückstellkraft des Schwingungsdämpfers 34, der die beim Aneinanderschlagen der Bordwände entstehenden lästigen Geräusche unterbinden soll. Die Hubbegrenzung in dem hier dargestellten Fall wird im Gegensatz zur Darstellung in den Figuren 3 und 4 nicht über einen Bund 22.2 (Figur 3 und 4) am Riegelbolzen 22 erreicht, sondern durch das Anlegen der Kontur der Griffschale 21.1 an die obere Kontur 20.2 (Figur 3) des Gehäuses 20, wodurch eine weitere Begrenzung des Hubes des Riegelbolzens und somit seine Grenzlage gegeben ist. In Figur 7 ist die Griffschale 21.1 ausgeschwenkt. Der Bolzenmitnehmer 25 hat den Riegelbolzen 22 gegen die Federkraft zurückgezogen ; die Feder 23 ist gespannt. Bei der axialen in Richtung auf die rückwärtige Gehäuseseite gerichteten Bewegung des Riegelbolzens 22 gleitet er aus dem Auge 32.1 des Ösenarmes 32 und gibt diesen Ösenarm frei. Somit kann die bewegbare Bordwand 12 abgeklappt werden, der Ösenarm 32 verläßt die Ösenarmaufnahme 28 und die die Schwingungen unterdrückenden Schwingungsdämpfer 34 gewinnen ihre entspannte Form zurück.

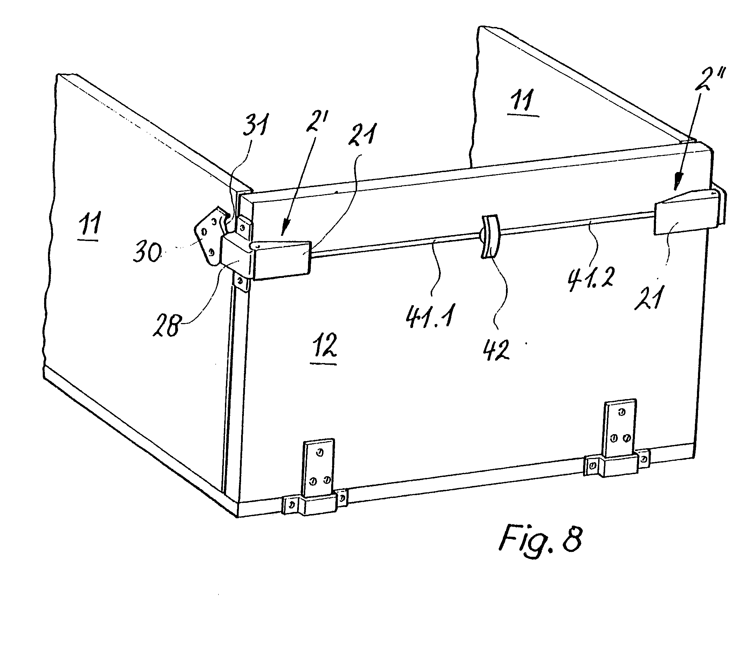

Schließlich zeigt die Figur 8 ein besonderes Ausführungsbeispiel mit der paarweisen gegenständigen Anordnung zweier Verriegelungsvorrichtungen mit zentraler Betätigung. Auf beiden Seiten der bewegbaren Bordwand 12, die mit den — in der Figur 8 nicht näher bezeichneten — Scharnieren am Fahrzeugboden schwenkbar befestigt ist, befinden sich die beiden gegenständig angeordneten Riegelteile der Verriegelungsvorrichtung 2' und 2''. Ein Zuggestänge mit den beiden Endteilen 41.1 und 41.2 verbindet beide Riegelbolzen miteinander, die unter den Schalen 21 angeordnet sind. Beide Riegelbolzen werden — wie in den Figuren 5 und 6 dargestellt — mit jeweils einer Feder in Grenzlage gehalten. Die durch den Drehgriff 42 gegensinnig bewegbaren Teile 41.1 und 41.2 des Zugestänges wirken auf die Riegelbolzen so, daß beim Drehen des Griffes 42 beide Riegelbolzen gegen die Federrichtung zurückgezogen werden. Dabei gleiten die Spitzen der Riegelbolzen aus den Augen der beiden Ösenarme, die Verriegelung ist somit aufgehoben und die bewegbare Klappwand kann um die Scharniere geschwenkt werden. Beim Schließen läuft der Vorgang automatisch ab : Die bewegbare Klappwand wird gegen die festen Wände 11 geschwenkt, die Ösenarme 32 mit den Augen 32.1 gleiten in die Ösenarmaufnahmen 28 der Riegelteile 2' und 2'' auf der bewegbaren Klappwand 12. Die vorderen Enden beider Ösenarme stoßen auf die Aufgleitschrägen 22.1 beider Riegelbolzen 22, infolge der auftretenden Keilwirkung werden beiden Riegelbolzen 22 gegen die Wirkung der Federn zurückgedrückt bis die Augen in die Position gekommen sind, daß beide Riegelbolzen in ihre Grenzlage schnellen. Damit sind beide Verriegelungsvorrichtungen eingerastet und die Klappwand 12 ist verriegelt.

Die nach der Erfindung vorgeschlagene Verriegelungsvorrichtung bedarf keiner zusätzlichen Handbetätigung wenn die bewegbare Bordwand verriegelt werden soll : beim Zuschlagen der Klappe erfolgt ein selbsttätiges Einrasten. Dies ist ein sehr wesentlicher Vorteil, wenn beispielsweise lebende Tiere transportiert werden sollen, die, bedingt durch ihre Unruhe, gegen die bewegbare Bordwand drücken und so Schwierigkeiten beim Schließen entstehen lassen. Während des Transportes ist die Bordwand fest verriegelt, da bei der Art der Belastung keine den Riegel zurückschiebende Kraftkomponente auftreten kann. Zusätzliche Sperren, etwa einführbare Splinte oder dergleichen sind zwar denkbar, auf sie kann jedoch im Regelfall verzichtet werden. Die durch das Fahren über auch nicht immer gut ausgebaute Straßen und Wege bedingte Bewegung der Bordwände gegeneinander könnte zu einem Schlagen der Verriegelungsvorrichtung, und damit zu einer unerwünschten Geräuschentwicklung führen. Der den Ösenarm umfassende Kragen der Ösenarmaufnahme verhindert seitliche Bewegungen und somit auch dadurch bedingte Geräusche. Die zwischen der klappbaren Bordwand und den Kanten der festen Bordwände vorgesehenen Schwingungsdämpfer fangen Bewegungen der klappbaren Bordwand in Klapprichtung auf und geben aufgrund ihrer elastischen Rückstellkräfte eine Vorspannung, die als Kraft letztendlich vom Auge des Ösenarms übetragen auf den Riegelbolzen wirkt. Durch diese Kraft sind Riegelbolzen und Ösenarm gegeneinander fixiert. Auch hier wird durch die Vorspannung ein « Schlagen » sowohl der klappbaren Bordwand gegen die Kanten der feststehenden Bordwände, als auch ein « Schlagen » innerhalb der Verriegelungsvorrichtung unterbunden. Der einfache Aufbau der Verriegelungsvorrichtung gestattet ein wirtschaftliches Herstellen, wobei, was besonders für zum Transport von Tieren eingerichtete Kraftfahrzeuganhänger bedeutsam ist, die Verriegelungsvorrichtungen so angebracht werden können, daß auf der Innenseite der Bordwände keinerlei vorstehenden Teile notwendig sind. Dadurch kann die Verletzungsgefahr der Tiere — naturgemäß auch die Beschädigungsgefahr für nicht lebende Transportgüter — unterbunden werden. Die bei der neuerungsgemäßen Verriegelungsvorrichtung möglichen Maßnahmen zur Unterdrückung unerwünschter Geräuschentwicklung ist nicht nur eine dem Schutze der Umwelt dienende Maßnahme, sie ist darüberhinaus ein Verschleißschutz der die Haltbarkeit der Verriegelungsvorrichtung und ihre Betriebssicherheit wesentlich mit bestimmt.

**Patentansprüche**

1. Verriegelungsvorrichtung für Klappwände, -läden, -türen oder dergleichen, insbesondere für klappbare Bordwände (11, 12) von Fahrzeugen oder Fahrzeuganhängern, die im Winkel zueinander stehen, mit einem Gehäuse verschieblichen, federbelasteten Riegelbolzen (22), der zur axialen Verschiebung von der Schließstellung in die Frei-Stellung von einem formschlüssig angreifenden Hebel (24, 25) gegen die Federwirkung zu betätigen ist, zur Anbringung an einem Wandelement und eine damit zusammenwirkende Öse (32, 1) an dem anderen Wandelement, gekennzeichnet durch ein Gehäuse (20) mit abgewinkelter Ösenarmaufnahme (28) und in der rückwärtigen Gehäusewand (20.1) angeordneter hinterer Führung für den Riegelbolzen (22), sowie eine das Gehäuse (20) in zwei Räume (die Ösenarmaufnahme und die Bolzenaufnahme) unterteilende Platte (26), in der die vordere Führung des Riegelbolzens (22) angeordnet ist, wobei der Riegelbolzen (22) im Abstand von der vorderen Führung mit einem Bolzenmitnehmer (25) versehen ist und seine Feder (23) zwischen diesem Bolzenmitnehmer (25) und der rückwärtigen Gehäusewand (20.1) angeordnet ist und weiterhin eine, die freie Gehäuseseite abdeckende Schale (21), die über eine Schwenkachse (24) mit der Oberseite des Gehäuses (20) verbunden ist und mit ihren abgewinkelten, die freien Seiten des Gehäuses (20) übergreifenden Seiten über den Bolzenmitnehmer (25) mit dem Riegelbolzen (22) verbunden ist und in ihrem rückwärtigen Bereich als Griffschale (21.1) ausgebildet ist und wobei die Verschlußöse an ihrem Ösenarm (32) mit einer Abkröpfung (31) versehen ist.

2. Verriegelungsvorrichtung nach Anspruch 1, dadurch gekennzeichnet, daß der Riegelbolzen (22) mit einem in Grenzlage an der rückwärtigen Gehäuseseite (20.1) anliegenden Bund (22.2) versehen ist.

3. Verriegelungsvorrichtung nach Anspruch 1 und 2, dadurch gekennzeichnet, daß der Bolzenmitnehmer (25) des Riegelbolzens (22) als sich in Grenzlage gegen die Platte (26) aufstützender Hubbegrenzer ausgebildet ist.

4. Verriegelungsvorrichtung nach Anspruch 1-3, dadurch gekennzeichnet, daß die Einführöffnung der Ösenarmaufnahme (28) für den Ösenarm (32) mit einem Kragen (29) versehen ist.

5. Verriegelungsvorrichtung nach Anspruch 4, dadurch gekennzeichnet, daß der Kragen (29) eine die Kante der Einführöffnung der Ösenarmaufnahme (28) übergreifende Wulst (29.1) aufweist.

6. Verriegelungsvorrichtung nach Anspruch 5, dadurch gekennzeichnet, daß der Kragen (29) mit Wulst (29.1) als einstückiges Formstück ausgebildet ist.

7. Verriegelungsvorrichtung nach Anspruch 6, dadurch gekenzeichnet, daß das einteilige Formstück aus Kunststoff besteht.

8. Verriegelungsvorrichtung nach einem oder mehreren der vorstehenden Ansprüche, dadurch gekennzeichnet, daß bei paarweise gegenständiger Anordnung der Verriegelungsvorrichtungen auf einer Klappwand (12) eine deren Riegelbolzen (22) verbindende Zugeinrichtung (41) vorgesehen ist.

9. Verriegelungsvorrichtung nach Anspruch 8, dadurch gekennzeichnet, daß die Zugeinrichtung (41) als zweiteiliger Zug (41.1, 41.2) ausgebildet ist.

10. Verriegelungsvorrichtung nach Anspruch 9, dadurch gekennzeichnet, daß ein Drehgriff (42) vorgesehen ist mit dem die Züge des zweiteiligen Zuges (41.1, 42.1) in Eingriff sind.

**Claims**

1. Locking device for flap walls, Venetian blinds, flap doors or the like, particularly for hinged side walls (11, 12) of vehicles or vehicle trailers, those walls being in angular relationship with respect to each other, having a springloaded locking bolt (22) displaceable in a housing, this bolt being to be actuated from the locking position into the free position by a positively engaging lever (24, 25) against the spring action, to be mounted on one wall element and a corresponding lug (32, 1) on the other wall element, characterized by a housing (20) with angled lug arm holding fixture (20) and with a rear guiding device for the locking bolt (22) arranged in the rear housing wall (20.1), and a plate (26) dividing the housing (20) in two compartments (the lug arm holding fixture and the bolt holding fixture), in this plate the front guiding device for the locking bolt (22) being arranged, the locking bolt (22) being provided spaced to the front guiding device with a bolt engaging piece (25) and its spring (23) being arranged between said bolt engaging piece (25) and the rear housing wall (20.1) and furthermore a shell (21) covering the free side of the housing and being connected over a swivel axis (24) to the top side of the housing (20) and being connected with its angled sides overlapping the free sides of the housing (20) over the bolt engaging piece (25) to the locking bolt (22) and being designed at its rear part as handle shell (21.1) and the locking lug being provided with a bent zone (31) at its lug arm (32).

2. Locking device according to claim 1, characterized by that the locking bolt (22) is provided with a collar (22.2) in the limit position at the rear housing side (20.1).

3. Locking device according to claims 1 and 2, characterized by that the bolt engaging piece (25) of the locking bolt (22) being designed as travel limiter supported in the limit position on the plate (26).

4. Locking device according to claims 1-3, characterized by that the inlet for the lug arm holding fixture (28) for the lug arm (32) is provided with a collar (29).

5. Locking device according to claim 4, characterized by that the collar (29) is provided with a bead (29.1) overlapping the edge of the inlet for the lug arm holding fixture (28).

6. Locking device according to claim 5, characterized by that the collar (29) with bead (29.1) is designed as moulded one-piece part.

7. Locking device according to claim 6, characterized by that the moulded one-piece part consists of plastic.

8. Locking device according to one or more of the preceding claims, characterized by that for an arrangement opposite in pairs of the locking devices on a flap wall (12), a traction device (41) connecting the locking bolts (22) to each other is provided.

9. Locking device according to claim 8, characterized by that the traction device (41) is formed by a two-piece traction rope (41.1, 41.2).

10. Locking device according to claim 9, characterized by that a turning handle (42) being in engagement with the traction ropes of the two-piece traction ropes (41.1, 41.2) is provided.

## Revendications

1. Dispositif de verrouillage pour parois, volets, portes ou éléments analogues rabattables, en particulier pour hayons rabattables (11, 12) de véhicules ou de remorques de véhicules disposés en décrivant un angle, présentant un pêne de verrouillage (22) qui est chargé par un ressort, peut coulisser dans un boîtier et doit être actionné à l'encontre de l'action du ressort, pour coulisser axialement de la position fermée à la position libérée, par un levier (24, 25) en prise par concordance de formes, en vue d'une installation sur un élément de paroi en association avec un œillet (32.1) situé sur l'autre élément de paroi, caractérisé par un boîtier (20) comprenant un logement coudé (28) du bras à œillet et un guide postérieur du pêne de verrouillage (22), ménagé dans la paroi postérieure (20.1) du boîtier, ainsi qu'une plaquette (26) qui subdivise ledit boîtier (20) en deux compartiments (logement du bras à œillet et logement du pêne) et dans laquelle se trouve le guide antérieur du pêne de verrouillage (22), ce pêne de verrouillage (22) étant pourvu d'un organe d'entraînement (25) à distance du guide antérieur, et son ressort (23) étant intercalé entre cet organe d'entraînement (25) du pêne et la paroi postérieure (20.1) du boîtier, le dispositif présentant par ailleurs une coquille (21) qui recouvre le côté libre du boîtier, qui est reliée par l'intermédiaire d'un axe de pivotement (24) à la face supérieure du boîtier (20), qui est reliée au pêne de verrouillage (22), au moyen de l'organe d'entraînement (25) de ce pêne, par ses faces coudées coiffant les côtés libres du boîtier (20), et qui est réalisée dans sa région postérieure en tant qu'aile de préhension (21.1), la gâche de verrouillage étant munie d'un coude (31) sur son bras (32) à œillet.

2. Dispositif de verrouillage selon la revendication 1, caractérisé par le fait que le pêne de verrouillage (22) est doté d'un collet (22.2) appliqué, dans la position limite, contre la face postérieure (20.1) du boîtier.

3. Dispositif de verrouillage selon les revendications 1 et 2, caractérisé par le fait que l'organe d'entraînement (25) du pêne de verrouillage (22) est réalisé sous la forme d'un limiteur de course en appui contre la plaquette (26) dans la position limite.

4. Dispositif de verrouillage selon les revendications 1-3, caractérisé par le fait que l'orifice d'introduction du logement (28) recevant le bras (32) à œillet est pourvu d'un rebord (29).

5. Dispositif de verrouillage selon la revendication 4, caractérisé par le fait que le rebord (29) présente un bourrelet (29.1) chevauchant l'arête de l'orifice d'introduction du logement (28) du bras à œillet.

6. Dispositif de verrouillage selon la revendication 5, caractérisé par le fait que le rebord (29) et son bourrelet (29.1) sont réalisés en tant que pièce moulée d'un seul bloc.

7. Dispositif de verrouillage selon la revendication 6, caractérisé par le fait que la pièce moulée monobloc consiste en une matière plastique.

8. Dispositif de verrouillage selon l'une ou plusieurs des revendications précédentes, caractérisé par le fait que, en cas d'agencement apparié des dispositifs de verrouillage sur un hayon rabattable (12), il est prévu un dispositif de traction (41) reliant les pênes de verrouillage (22) de ces dispositifs.

9. Dispositif de verrouillage selon la revendication 8, caractérisé par le fait que le dispositif de traction (41) est réalisé sous la forme d'un train en deux parties (41.1, 41.2).

10. Dispositif de verrouillage selon la revendication 9, caractérisé par le fait qu'il est prévu une poignée rotative (42) à l'aide de laquelle les tirants du train en deux parties (41.1, 41.2) sont en prise.

Fig.1

Fig. 2

Fig.3

Fig.4

Fig.5

Fig. 6

Fig.7

Fig. 8

0 054 825